# EUROPEAN PATENT SPECIFICATION

(11) **EP 1 533 353 B1**
(45) Date of publication and mention of the grant of the patent: **22.08.2007**
(21) Application number: 04394061.8
(22) Date of filing: 30.09.2004
(51) Int. Cl.: C09J 7/02, B29C 59/02, B29C 59/04, B32B 27/10, D21H 19/68

(54) **Structured release liner and processes for making the same**
Strukturierte Trennschicht und Verfahren zu deren Herstellung
Pellicule détachable structurée et procédé pour sa fabrication

(30) Priority: 01.10.2003 US 507931 P; 29.09.2004 US 953196
(43) Date of publication of application: 25.05.2005
(73) Proprietor: LOPAREX Inc., Willowbrook, Illinois 60521-5623 (US)
(72) Inventor: Bowen, Kurt Thomas, Clarendon Hills, Illinois 60514 (US); Cunningham, Patrick Kevin, Palos Park, Illinois 60464 (US); Mertz, William J., Carol Stream, Illinois 60188 (US)
(74) Representative: Moore, Barry

(56) References cited:
- EP-A- 1 146 170
- WO-A-02/074877
- WO-A-20/05014750

## Description

### Related Application

This non-provisional application claims the benefit of U.S. Provisional Application No. 60/507,931, filed October 1, 2003.

### Technical Field

This invention relates to sheet materials, and more particularly to polyolefin coated sheet materials, release liners for those polyolefin coated sheet materials, and for processes for making those release liners.

### Background of the Invention

Polyolefin coated substrates, such as polyethylene coated paper, are known for a variety of applications. The substrates can be prepared having a variety of surface finishes, such as gloss finishes, satin finishes, matte finishes, and structured finishes with peaks or projections protruding outwardly from the surface. These polyolefin coated substrates may include, on one of their sides, an adhesive. The adhesive ultimately provides for securing the substrate to a surface. To protect the adhesive between the time the substrate is manufactured, and the time that the substrate is to be adhered to the surface, the adhesive-coated side of the substrate is secured to a release liner. The release liner is removed when the substrate is ready to be applied to its surface, and that removal exposes the adhesive on the substrate that the release liner protects.

Polyolefin coated substrates are typically prepared by extruding a molten polyolefin polymer onto the surface of a substrate, and directing the resultant coated substrate through the nip of a chill roll and pressure roll. The desired surface appearance is imparted to the polyolefin coating by selection of a chill roll having the appropriate surface characteristics. For example, a mirror finish on the chill roll imparts a glossy appearance to the polyolefin coating, while a pocketed roll imparts peaks to the polyolefin coated surface. Many other similar methods are known in the art.

A known substrate is that disclosed in WO 02/074877 which provides a symmetrical pattern on one side of the substrate and then affixed that side to an adhesive layer.

Among the known methods in the art are those described in European Patent No. EP 1 146 170 B1 ("the '170 patent"). This patent is owned by the assignee of the present invention. The '170 patent describes a release liner, and a process to make that release liner, that is similar in several important respects to the release liner and process of the present invention. The '170 patent describes the manufacture of release liners using a slightly roughened chill roll. Such slightly roughened chill rolls may be made, for example, by blasting the smooth surface of a chill roll with a gritty substance, such as sand. The rolls made in this way have been established to have a so-called "randomized" surface. The surface is called "randomized" in view of the lack of a structure or regular pattern. As may be seen by a review of the '170 patent, the polyolefin coating on the substrate of the release liner has an Ra of from 1.52 µm to about 3.81 µm, and an Rz ranging from about 10 µm to about 30 µm.

In the prior art, the various surface finishes can be functional, aesthetic, or both in nature. For example, a glossy surface appearance may be desirable in flexible packaging applications. In some applications, however, a given finish is detrimental to the intended function of the product. For example, polyolefin coated substrates having a glossy appearance typically have a very high coefficient of friction. This can cause handling difficulties. For example, the sheets may tend to stick together when feeding a stack of glossy sheets through printing equipment.

For many end uses, a glossy appearance is undesirable. For example, many end applications require a paper-like surface appearance, resulting from a matte finish of the polyolefin coating. However, substrates and release liners having a matte finish can have an undesirably low coefficient of friction. This can also result in handling difficulties, particularly when feeding such combined substrate/release liner products through manufacturing equipment, laser printers, ink jet printers, and other similar mechanical devices. For example, while a stack of matte finish polyolefin coated sheets may separate more easily than glossy sheets, the frictional characteristics of the sheets may be so low that the sheets cannot be adequately "gripped" by guide rollers or other feed mechanisms. As a result, the sheets can jam equipment, or cause "double feeds", i.e., the inadvertent feeding of two or more sheets when the feeding of only one sheet is intended.

### Summary of the Invention

The invention provides a release liner for use with an adhesive facestock as claimed in claim 1. Advantageous embodiments are in the dependent claims.

The invention also provides a method of placing the engineered, precision engraved, structured pattern onto the release liner. For the purposes of this invention, an "engineered, precision engraved, structured pattern" refers to a largely repeating, geometric, symmetrical pattern. Typically, such a structure has both a relatively high Ra and Rz.

In the present invention, the roughness of the chill roll is significantly higher than the roughness of the chill rolls of the '170 patent. As a result, the roughness of the resulting release liners will also be significantly higher. Also in the present invention, to modify the coefficient of friction of a polyolefin coated substrate, the polymeric surface can be "structured" to impart a geometric pattern on the surface of the polyolefin coating. The resultant surface can improve handling in subsequent operations.

The specially made chill rolls impart to the release liner a repeatable, patterned surface on one of its sides. While any symmetrical pattern may be used, the structured surface is most preferably a helicoidal (interchangeably referred to herein as "trihelical") or a quadragravure pattern. Any other engineered, precision engraved, structured pattern may be used, where the cell size, density, and depth have been optimized for their end use. Preferably, the cell size has a volume of 14 BCM to 45 BCM, the cell count density is in the range of 1.97 to 5.9 lines per mm (50-150 lines per inch), and the depth is from 12.7 µm (0.5 mil) to 88.9 µm (3.5 mil), with a preferred depth of 25.A µm (1.0 mil). Cell structure will be optimized to facilitate delivery of extruded polymer from the chill roll to the substrate.

The structured surface can also be optimized for enhancing the feed of sheets through a printer, or for tracting in a subsequent processing step that may be performed prior to end use of the finished product. The structured surface can also be optimized for the most advantageous pattern. Size and structure can be optimized for a particular pattern on the substrate.

The structured release liner of the present invention has several desirable properties. First, the engineered patterned surface is placed upon the back side of the release liner, i.e., the outer side of the release liner, or the side of the release liner that does not abut the substrate.

Here, it has been discovered that the placement of a particular pattern having a regular, repeating characteristic results in a release liner having superior feeding properties.

In addition, the release liner manufactured in accordance with the current invention has a different appearance from release liners manufactured with prior art methods. Release liners manufactured with prior art methods, such as those manufactured with the method of the '170 patent, have a somewhat spotted or "blotchy" appearance. In contrast, the appearance of release liners manufactured with chill rolls having the presently claimed engineered, precision engraved, structured pattern have a much more uniform, smooth appearance.

In other words, the use of the preferred, engineered helicoidal or quadragravure pattern imparts desirable surface frictional properties and desirable aesthetic properties to the back side of the release liner. As a result, both the handling and the appearance of the substrate/release liner product is improved. When a stack of the substrate/release liner product is fed through feeding mechanisms associated with laser printers, digital printers, and the like, the product is less likely to jam, and more likely to move smoothly through the feeding mechanisms.

In summary, the placement of the engineered pattern on the matte side of the release liner improves the frictional characteristics and the feeding effectiveness of the combined substrate/release liner sheet material.

This is surprising in view of the industry practice of placing random and irregular patterns, rather than engineered, precision engraved, uniform structured patterns, on polyolefin-coated substrates to decrease the frictional characteristics of those substrates.

The support substrate can be any of the types of materials known in the art, but preferably is a paper substrate. The support substrate may have a polyolefin coating, or other suitable coating, on one or both of its opposing surfaces. When the support substrate includes a polyolefin coating on each surface, the coating may be formed of the same or different polyolefin material.

The substrate may also have the same or different surface characteristics, depending upon the desired properties of the product. In addition, a surface of the structured substrate may be treated so that the surface is receptive to printed indicia, for example, by corona treatment, applying an ink receptive coating, and other suitable processes.

The release liner of the present invention can be made in a manner generally known in the art. What is not known from the art is the use of a chill roll having an engineered, precision engraved, structured pattern.

In the manufacture of the substrate, a release liner is made when a release coating is applied to a surface of a product made of the same material as the substrate, opposite the structured polyolefin coating.

Structured polyolefin coated release liners can be prepared using an extrusion coating process. Specifically, a suitable polyolefin resin is heated and extruded as a molten film or sheet onto a surface of a support substrate. The resultant coated release liner material is then directed through the nip formed by cooperating pressure and chill rolls to set the molten polyolefin coating and adhere it to the release liner material. The chill roll is selected to impart the desired surface characteristics to the polyolefin coating.

In this regard, these regular patterns, including the helicoidal pattern or the quadragravure pattern, extend into the chill roll. Particularly, the outer surface of the chill roll is configured so as to impart the desired engineered pattern onto the roughened side of the release liner.

As a result, when the molten polyolefin coating on the release liner is directed against the chill roll surface, the chill roll transfers its surface characteristics to the polyolefin coating, i.e., imparts a plurality of highly repeatable, regular helicoidal lines or quadragravure patterns onto the roughened side of the release liner. The product can then be directed to a winding roll or immediately directed to an additional downstream processing station, such as a printing station.

### Brief Description of the Drawings

Some of the features and advantages of the invention having been described, others will become apparent from the detailed description which follows and from the accompanying drawings, in which:
FIG. 1 is a schematic perspective view of 2 layers of a multilayered engineered, precision engraved, structured pattern polyolefin coated substrate, with its respective layers exposed for clarity of illustration.
FIG. 2 is a greatly enlarged perspective view illustrating a portion of the surface of the engineered structured polyolefin coated substrate of FIG. 1, taken within ring 2 of FIG. 1.
FIG. 3 is a greatly enlarged cross sectional view of the engineered structured polyolefin coated substrate of FIG. 1.
FIG. 4 is a schematic perspective view of a release liner in accordance with the present invention which includes an engineered (quadragravure patterned) structured polyolefin coated substrate as a component.
FIG. 5 is a schematic view of an apparatus for the manufacture of the structure of the invention.
FIG. 6 is an enlarged, top, perspective view of a trihelical pattern.
FIG. 7 is an enlarged sectional view of the trihelical pattern, taken along lines 7-7 of FIG. 6.
FIG. 8 is a schematic perspective view of 2 layers of a release liner which includes an engineered (trihelical-patterned) structured polyolefin coated substrate as a component.
FIG. 9 is a view of the structure of FIG. 4, further including an adhesive facestock.

### Detailed Description of Preferred Embodiment

A preferred embodiment of the invention is described below. This invention may, however, be embodied in many different forms and should not be construed as limited to the embodiments described below. Instead, these embodiments are provided so that this disclosure will fully convey the scope of the invention to those skilled in the art.

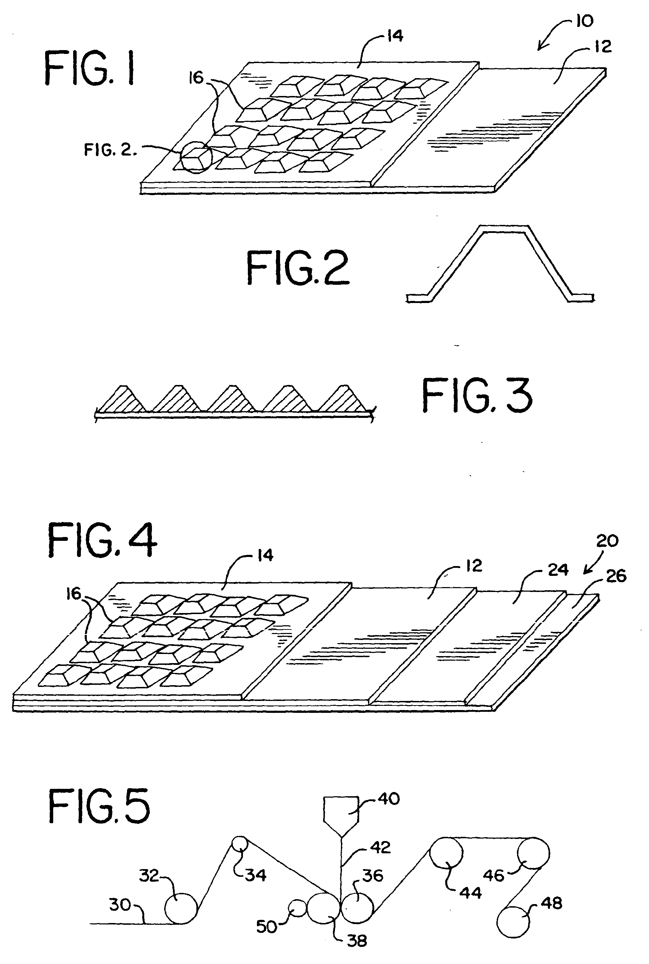

FIG. 1 is a schematic perspective view of one version of an engineered, precision engraved, structured pattern on a polyolefin coated substrate designated generally as 10. As this view only shows 2 layers it does not fall within the scope of the claimed invention. In FIG. 1, the respective layers of the structured polyolefin coated material 10 are cut away or exposed for clarity of illustration. Generally, structured polyolefin coated substrate 10 includes a support substrate 12 and a polyolefin coating 14 on its surface.

The outer surface of the polyolefin coating 14 is characterized as having a highly roughened finish. As used herein, the term "highly roughened" refers to a surface that is created by a chill roll having the following characteristics: the cell size has a volume of 14 BCM to 45 BCM, the density of the pattern is in the range of 50-150 lines per inch, and the depth of the pattern ranges from 12.7 µm (0.5 mil) to 88.9 µm (3.5 mil), with a preferred depth of 25.4 µm (1.0 mil).

Support substrate 12 can be any of the types of substrates as known in the art, including without limitation polymeric substrates, such as, but not limited to, polymer films (including metallized and voided films), polymer foams, sheets formed of synthetic staple fibers and/or filaments; cellulosic substrates, such as paper substrates (including metallized paper); substrates including both polymeric and cellulosic components, for example, sheets formed of a blend or mixture of synthetic and cellulosic staple fibers and/or filaments; and metal foils.

Preferably support substrate 12 is a cellulosic substrate, and more preferably a paper substrate. Any of the types of papers conventionally known in the art for preparing coated papers can be used in the invention, such as but not limited to kraft paper, natural or synthetic pulp paper, paperboard, and liner board. The paper may additionally contain conventional paper adjuvants, such as but not limited to strength increasing agents, sizing agents, dyes, fluorescent whitening agents, preservatives, fillers, antistatic agents, clay, kaolin, talc, barium sulfate, calcium carbonate, titanium dioxide, and zinc oxide.

Polyolefin coating 14 can be formed of any of the types of polyolefin resin materials known in the art useful for coating a substrate. Examples of polyolefin resins include ethylene homopolymers, copolymers, and terpolymers, such as high density polyethylene, low density polyethylene, and linear low density polyethylene; propylene homopolymers; polymethylpentene hompolymers; and copolymers, terpolymers, and blends thereof. Examples of copolymerizable monomers include alpha olefins such as styrene, vinyl acetate, acrylic acid, methyl acrylate, ethyl acrylate, acrylamide, methacrylic acid, methyl methacrylate, ethyl methacrylate, methacrylamide, 1-butene, 1-hexene, 1-octene, and diene compounds such as butadiene and isoprene. The polyolefin resin can be employed alone or in combination, as in a coextruded coating. The coating weight of the polyolefin coating layer 14 can vary, and typically ranges from 3.5 grams per square meter to 47 grams per square meter, preferably from 16 grams per square meter to 28 grams per square meter, although coating weights outside of these ranges can also be used.

The polyolefin may further contain a variety of additives as known in the art, such as but not limited to fluorescent agents, whitening agents, anti-oxidizing agents, antistatic agents, releasing agents, dyes, dispersing agents, pigments, and fillers.

The thickness of the polyolefin coating can vary, typically ranging from 10.1 µm (0.4 mils) to 101.6 µm (4.0 mils), and preferably from 20.3 µm (0.8 mils) to 30.5 µm (1.2 mils).

Turning now to FIG. 4, the particular aspect of the invention is illustrated, specifically, a release liner designated generally as 20. Release liner 20 includes a supporting or carrier substrate, such as the structured polyelofin coated substrate 10 of FIG. 1. Release liner 20 also includes one or more additional and optional polyolefin layers, such as polyolefin layer 24 in FIG. 4 and a release layer 26 on a surface of the substrate opposite the structured polyolefin coating. Such additional polyolefin coatings, such as layer 24, may optionally be topographically structured or modified.

Release layer 26 can include any of the types of agents known in the art which impart release properties to a substrate. For example, release layer 26 can be a coating of a release agent, such as a fluoropolymer, silicone, and chromium complexes of long chain fatty acids. Typically, such release agents are cured by any of several techniques, such as by heat, by electromagnetic radiation, such as ultraviolet (UV), electron beam, and by moisture, as known in the art. Release layer 26 can also be cured by evaporative processes as known in the art, i.e., dried to remove solvent. Exemplary release agents include, without limitation, SYL-OFF~ 294 with Dow Coming 176 Catalyst, commercially available from Dow Corning; UV93 15 with UV9310C catalyst, commercially available from General Electric Silicones, and Quilon®, commercially available from E.I. DuPont Corona treatment can be used to promote adhesion of the release agent to the surface of the structured polyolefin coated substrate. Release layer 26 has a thickness sufficient to impart the desired release properties to the release liner sheet 20 of the invention, and typically ranges from about 0.1 micrometers to about 1.6 micrometers.

FIG. 9 adds additional structure to the structure shown in FIG. 4. FIG. 9 depicts two different components. The first component is a release liner 20. The second component is an adhesive facestock 29 with which the release liner 20 is used. The release liner comprises a support substrate 12; a polyolefin layer 24; a polyolefin coating 14; and a highly engineered, precision engraved structured pattern 16. The adhesive facestock 29 includes an adhesive layer 28.

The release liner 20 has a first side and a second side. The first side of the release liner is essentially the polyolefin coating 14. Formed on this polyolefin coating 14 is the highly engineered, precision engraved, structured pattern 16.

The second side of the release liner 20 comprises the release layer 26. This release layer 26 is relatively smooth. In addition, the second side (i.e., the release layer 26) of the release liner 20 is placed in face-to-face contact with the adhesive layer 28 of the adhesive facestock 29.

The release liners of the invention can be used in combination with other sheet materials as known in the art. For example, adhesive can be applied to the release layer of the release liner sheet so as to form an adhesive layer that is releasably adhered to the release liner. The adhesive layer/release liner composite structure can thereafter be directed into a face-to-face relationship with a suitable substrate (which can be any of the types of substrates described above) to form a release liner/adhesive/substrate structure such that the adhesive layer is sandwiched between the substrate and release liner sheet. The adhesive layer can be formed of various suitable conventional adhesives known in the art, and preferably is a pressure sensitive adhesive.

The structured polyolefin coated substrate has been described above as a useful supporting substrate in a release liner application. The structured polyolefin coated substrates of the invention can be used in other applications as well, and are particularly advantageous in printing applications. In this regard, the surface of the substrate opposite the structured polyolefin coated surface can be rendered receptive to printed indicia, as described above. By imparting a regular pattern, such as a helicoidal, quadragravure, or other highly engineered, structured pattern to the one side of the release liner, sheet feeding problems that occur with some prior art release liners can be lessened or overcome. In addition, the highly engineered, structured pattern is aesthetically pleasing. The density of the structured pattern is optimized for subsequent processing or feeding.

The depth of the structured pattern is optimized for the end use, and for the delivery of the pattern to the substrate.

As a result of this highly engineered structure, one side of the release liner will impart to the substrate/release liner structure desirable frictional characteristics, for example, for feeding through laser and ink-jet printers.

### Manufacture of Suitable Chill Roll

A suitably configured chill roll 36 is necessary in connection with the manufacture of the release liner of the invention. Such a chill roll 36 will have a reproducible, repeating pattern. In this way, when the chill roll contacts a coated substrate to be treated, the repeating pattern of the chill roll 36 will be imparted onto the coating on that substrate.

Different geometric patterns can be engraved into the chill roll surface. When each of these geometric patterns are formed on the chill roll, that chill roll will in turn impart the desired, uniform pattern onto the release liner, and especially onto the coating of the release liner.

Various uniform geometric patterns may be engraved onto the surface of the chill roll 36. Two preferred examples include a quadragravure pattern, or a trihelical pattern, each of which is shown in the Figures accompanying this disclosure.

The quadragravure and trihelical patterns are available from Pamarco Global Graphics (hereinafter "Pamarco") of Roselle, New Jersey (www.anilox.com). The general shape of the quadragravure pattern is like that shown in FIGS. 1-4 of this disclosure. Pamarco describes the quadragravure pattern as a "mill engraved cell, which has a flat bottom to help promote good ink release." As alluded to above, the flat bottom when combined with a cupped portion along the sides of the quadragravure and trihelical patterns will help to we movement of polyolefin (such as polyethylene) away from the chill roll.

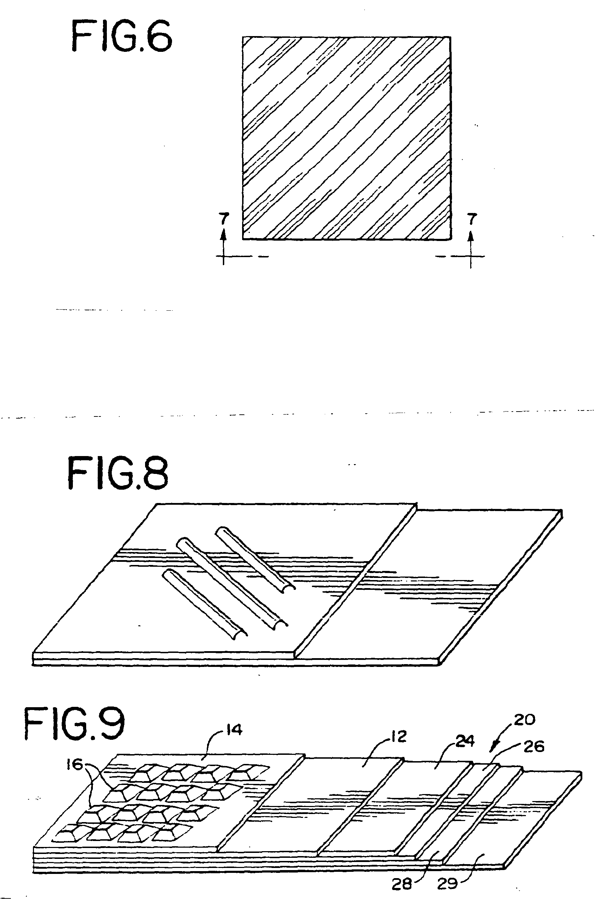

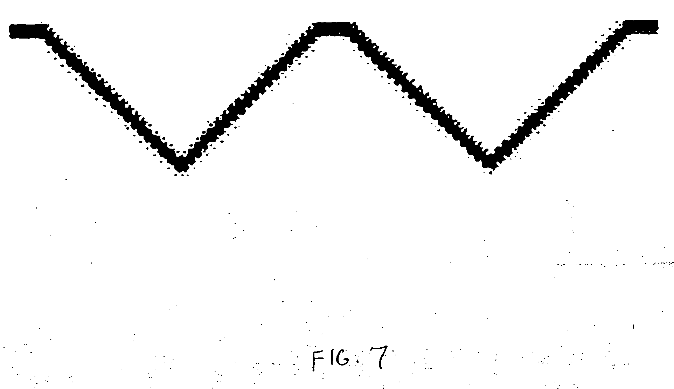

The trihelical pattern is described by Pamarco as including "helicoidal engraving." An enlarged, top, perspective view of the trihelical pattern is shown in FIG. 6, while an enlarged sectional view of the trihelical pattern is shown in FIG. 7.

These patterns are engraved onto the surface of the chill roll. The typical steel chill roll has, prior to engraving, a smooth surface. The engravings on the cylindrical chill roll are applied by means of a hardened tool, and by mechanical embossing, in a manner well-known to those of skill in the art. After the patterns are engraved onto the relatively soft steel surface of the cylindrical chill roll, a chromium layer is deposited over the patterns in order to harden the surface. This both improves durability and slows the rate of wear of the patterns, during use of the chill roll. The chromium layer is deposited in a manner well-known in the art, i.e., by means of electrostatic plating.

As indicated above, the patterns that can be engraved onto the surface of the chill roll can include any repeating preferably geometric pattern, such as, but not limited to, a quadragravure pattern or a trihelical pattern. The dimensions and frequency of such engraved patterns are specified by various parameters, such as the number of cells per millimetre (lines per mm), the depth of the cells (measured in microns) and the volume (in cubic billion microns/square centimetre) (the number of cells per linear inch (specified in "lines per inch"), the depth of the cells (measured in microns), and the volume (in billion cubic microns per square inch ("BCM")).

In this invention, the preferred dimensions and frequency of the engraved patterns are in the range of 1.97 to 5.91 lines per mm (50-150 lines per inch) depths of 12.7 µm (0.5 mil) to 88.9 µm (3.5 mil), with a preferred depth of 25.4 µm (1.0 mil); and volumes of 2.17 to 7 cubic billion microns/cm² (14 BCM to 45 BCM).

Repeatability of the engraved patterns is essential. That uniformity is ensured by maintaining the tolerances of the above-referenced dimensions to within ±5%. When the repeatability of the engraved patterns is maintained, then the repeatability of the pattern created by the chill roll onto the surface of the release liner is also maintained.

Prior art methods for treating chill rolls include the formation of a matte finish onto that chill roll. Such a matte finish can be formed by blasting, with an abrasive or grit medium (such as, but not limited to, sand), either (a) the raw steel surface of the chill roll, or (b) the chromium plating upon the steel surface of the chill roll.

In contrast, by using the chill roll described above, with its precision engraved surface, the randomness is reduced. Instead, a release liner with a regular, reproducible pattern is provided. The user can engineer a specific pattern or structure as necessary for a particular end use application.

### Dimensions and Characteristics of Engrayed Surface Pattern

After is chill roll has been produced as described above, its surface characteristics in general and its roughness values in particular, are measured. Measurements are made directly upon the surface of the chill roll that is used to manufacture the release liner. The measurements are made with a Mahr M-2 Perthometer. This device measures in microinches. The Mahr M-2 Perthometer is also used to monitor the roughness of the chill rolls during use. Particularly, periodic measurements are made to determine whether there are any significant changes in roughness. When the roughness of the chill roll surface has dropped so that it is near the lower limits of the specifications, the rolls are reconditioned or replaced.

Ra is the avenge change in vertical height, from point to point. In contrast, Rz is the average of the five (5) highest peak to valley height differentials.

| **Type** | **Roll Type** | **Ra Micro Inches (µm)** | **Rz Micro Inches (µm)** |
|---|---|---|---|
| Standard Matte | Random Matte | 120 (3.1) | 835 (21.2) |
| 95TH Trihelical | Trihelical | 451 (11.5) | 2000 (50.8) |
| 960 Truncated Pyramid | Quadravure | 363 (9-2) | 1430 (36.3) |

As can be seen from the above table, when a chill roll is treated so as to create a conventional matte finish upon its surface, as for example described in the '170 patent, both the Ra and Rz values arc considerably lower than those of the structured patterns of the invention. In other words, the Ra (roughness) of the surfaces of the rolls having both the structured trihelical and the quadragravure (truncated pyramid) shapes in accordance with the invention greatly exceed the Ra (roughness) of the surfaces of rolls made with a more "randomized" standard matte finish.

It will be understood by those of skill in the art that the patterns of the invention need not be limited to trihelical and quadragravure pattern. Rather, the precision engraving process can create patterns in a variety of shapes. Moreover, different depths and land areas may be utilized.

As noted above, the structured chill roll surfaces in accordance with the invention exhibit greater roughness than the "randomized" standard matte chill roll surfaces. There is a correlation between the roughness of the chill roll and the roughness of the film or paper upon which the chill roll imparts a surface texture. Hence, the chill rolls having the structured surfaces of the invention will create "rougher" film or paper substrates. This increase in roughness permits those papers or substrates to be more reliably fed through mechanical transport devices, such as printers.

### Ensuring Uniformity of Engrayed Surface Pattern

To ensure the uniformity of the engraving on the surface of the chill roll, the manufacturer of the chill roll utilizes a roll scope, i.e., a microscope specifically designed to determine the dimensions of engravings or patterns on a roll surface. This roll scope is used in conjunction with a volumetric test method.

In order to use this volumetric test method, a predetermined amount of a colored liquid is accurately metered onto the roll surface. Then, the user determines the area of the roll surface that is displaced by the known amount of colored liquid. With this information, the user is able to determine the volume of the engraved pattern per unit of surface area, in billion cubic microns per square inch (BCM) (cubic billion microns/cm²).

### Coating Process

The structured polyolefin coated substrate of the invention can be prepared using an extrusion coating process. Specifically, a suitable polyolefin resin is heated and extruded as a molten film or sheet onto a surface of a support substrate. The resultant coated support substrate is then directed through the nip by cooperating pressure and chill rolls to set the molten polyolefin coating and adhere it to the support substrate. The engraved chill roll surface imparts the desired surface characteristics to the polyolefin coating. The product can then be directed to a winding roll or immediately directed to additional downstream processing such as in-line application of functional coatings.

FIG. 5 schematically represents a process for making the engineered, structured release liners of the invention. As shown in FIG. 5, a web of a suitable substrate, such as a paper substrate 30, is directed from a roll (not shown) and guided by rolls 32 and 34 and to a nip formed by a chill roll 36 and a pressure roll 38. A polyolefin resin is extruded from an extruder 40 in the form of a sheet or film 42 and deposited onto the web 30 of paper. The web of paper 30, having a layer of extrusion coated resin, is directed between the nip formed by chill roll 36 and pressure roll 38. The chill roll 36 can be cooled using conventional techniques, such as for example by passing a cooling medium (e.g., water, through the interior thereof). The temperature of the chill roll 36 is generally maintained from 13°C (55°F) to 24°C (75°F).

The chill roll 36 is typically a cylindrical metal chill roll with a chromium coating applied to its outer surface. The cylindrical roll can be formed of a variety of metals, such as tungsten carbide, various steels, aluminum, and alloys of those metals. Tungsten carbide can dramatically improve wear resistance.

The chromium coating of the invention has an engineered surface, and those engineered surfaces can include, but are not limited to, a quadragravure or trihelical pattern. Other possible, non-limiting patterns can include quadragravure, trihelical, or other structured engineered patterns.

Laser engraving may be used to form these patterns. Alternatively, these patterns may be formed through the use of mechanical engraving.

As the polyolefin resin is extruded from the extruder 40 onto the paper web 30 and the coated paper passes through the nip formed by rolls 36 and 38, the polyolefin film is adhered to the paper and simultaneously the film surface forms a replica of the chill roll engineered pattern. Specifically, a quadragravure or trihelical/helicoidal pattern is formed into the polyolefin coating surface, at a typical depth of 25.4 µm (1.0 mil). In addition, the surface area of the polyolefin coating surrounding the pattern will have imparted to the matte side of the release liner a pattern corresponding to that of the surface pattern of the chill roll.

The laminating pressure between the pressure roll 38 and the chill roll 36 is adjusted and maintained by contacting a pressure back-up roll 50 against the pressure roll 38. The pressure roll 38 is typically a rubber or rubber covered roll having a Shore A durometer hardness ranging from 70 to 95. Other materials having a similar hardness and resiliency as rubber may optionally be used to form the pressure roll 38. The pressure back-up roll 50 urges the pressure roll 38 toward the chill roll 36 and may itself be cooled by passing a cooling medium such as water through its interior. The pressure between the pressure roll 38 and chill roll 36 as applied by the pressure back-up roll 50 generally ranges from about 14 kN/m to about 140 kN/m, and preferably ranges from about 17.5 kN/m to about 52.5 kN/m.

Contact with the chill roll cools and sets the polyolefin coating and thereafter the polyolefin coated paper is stripped from the chill roll by roll 44 and guided by rolls 46 and 48 to a winder (not shown).

The polyolefin resin is extruded from extruder 40 using conventional conditions. For example, as the skilled artisan will appreciate, the polyolefin resin temperature will vary depending upon the specific resin used but typically ranges from about 260°C (500°F) to about 345°C (650°F). The resin is extruded at a rate so as to form a polyolefin layer on the paper web 30 having a thickness ranging from about 10.1 µm (0.4 mils) to about101.6 µm (4.0 mils). The extrusion rate from extruder 40 is coordinated with the paper web running speed, which typically ranges from about 120 meters per minute up to about 460 meters per minute.

Friction between the chill roll and the substrate which it treats will result in a wearing of the surface of the chill roll. Accordingly, the engraved chill roll should be periodically checked to determine the extent of wear, and the need for replacement or resurfacing of the chill roll The check of the extent of wear is done by the use of the method above, under the heading "Ensuring Uniformity of Engraved Surface Pattern."

Variations of the extrusion processing conditions will be appreciated by those skilled in the art, such as increasing or decreasing extrusion temperature or web speed, varying the thickness of the polyolefin coating, modification of nip pressure and/or pressure roll hardness, and other process conditions.

In a preferred embodiment, the density of the lines of the patterns is between 1.97 to 5.9 lines per mm (50 to 150 lines per inch), and is most preferably 3.7 lines per mm (95 lines per inch).

In another preferred embodiment, the depth of the lines of the patterns ranges from approximately 12.7 µm (0.5 mil) to 88.9 m (3.5 mil), and is most preferably approximately 25.4 µm (1.0 mil).

Many modifications and other embodiments of the invention will come to mind to one skilled in the art to which this invention pertains. Therefore, it is to be understood that the invention is not to be limited to the specific embodiments disclosed, and that modifications and other embodiments to be included within the scope of the claims. Although specific terms are employed, they are used in a generic and descriptive sense only, and are not for purposes of limitation.

## Claims

1. A multilayered release liner (20) for use with an adhesive facestock, said release liner being formed from at least three layers and having a first side (14) and a second side (26), the first side of said release liner being imparted with a repeating, engraved, geometric, symmetrical pattern, and the second side of said release liner providing a release layer of the liner, the second side being smooth and including a release agent.

2. The release liner of Claim 1, wherein said patterned surface is made of one of:
a) a helicoidal pattern,
b) a quadragravure pattern,
c) a regular reproducible pattern.

3. The release liner of Claim 1, wherein the density of said patterned surface is in the range 1.97 to 5.9 lines per mm (50 to 150 lines per inch).

4. The release liner of Claim 3, wherein the depth of the lines are in the range from 12.7 µm to 88.9 µm.

5. The release liner of Claim 1, wherein said first side is formed from a polyolefin coating provided on a paper substrate, the polyolefin coating and paper substrate forming two of the at least three layers..

6. The release liner of Claim 5, wherein said paper substrate has a thickness ranging from 25.4 µm (1 mil) to 635 µm (25 mil) and a basis weight ranging from 20 grams per square meter to 400 grams per square meter.

7. The release liner of Claim 5, wherein said polyolefin coating is selected from the group consisting of polyethylene, polypropylene, polymethylpentene, and copolymers, terpolymers and blends thereof.

8. The release liner of Claim 5, wherein said polyolefin coating has a coating weight ranging from 3.5 grams per square meter to 47 grams per square meter.

9. The release liner of Claim 8, wherein said polyolefin coating has a coating weight ranging from 16 grams per square meter to 28 grams per square meter.

10. The release liner of Claim 5 said polyolefin coating having an Ra surface finish ranging from 3.8 µm (150 micro-inches) to 10.2 µm (400 micro-inches) and comprising a structure having an Rz ranging from 22.9 µm (900 micro-inches) to 50.8 µm (2000 micro-inches).

11. The release liner of Claim 5 wherein said release layer provided as a coating on a surface of said substrate opposite said polyolefin coated surface.

12. The release liner of claim 1 being formed from four layers, a first layer being a polyolefin coating having provided thereon the repeating, engraved, geometric, symmetrical pattern, a second layer being a paper substrate, a third layer being a polyolefin coating and a fourth layer being the release layer of the liner, the first and fourth layers providing the first and second sides of the liner.

13. The release liner of claim 1 wherein the release agent is selected from fluropolymer, silicone and chromium complexes of long chain fatty acids.

14. A composite structure including a substrate, an adhesive layer and a release liner as claimed in claim 1, the structure being arranged to form a release liner/adhesive/substrate arrangement such that the adhesive layer is sandwiched between the substrate and the smooth release layer of the release liner.

15. A process for making an engraved, patterned surface upon a substrate, comprising the steps of:
applying a molten polyolefin extrudate onto a surface of a substrate to form a polyolefin coated substrate; and
directing said polyolefin coated substrate though the nip of co-operating rolls, one of said rolls having a previously engraved surface and comprising a structure having an average depth ranging from 12.7 µm (0.5 mil) to 88.9 µm (3.5 mil) and an Ra surface finish of 5.1 µm (200 micro-inches) to 15.2 µm (600 micro-inches), under conditions sufficient to impart to a surface of said polyolefin coating a structure having an average height corresponding to the depth of said pockets and a surface finish corresponding to the Ra surface finish of said roll.

## Patentansprüche

1. Mehrschichtiges Trennmaterial ("release liner"; 20) zur Verwendung mit einem klebenden flächigen Material, wobei das genannte Trennmaterial aus wenigstens drei Schichten gebildet wird und eine erste Seite (14) und eine zweite Seite (26) aufweist, wobei die erste Seite des genannten Trennmaterials mit einem sich wiederholenden, eingeschnittenen, geometrischen, symmetrischen Muster versehen ist und die zweite Seite des genannten Trennmaterials eine ablösbare Schicht des Trennmaterials darstellt, glatt ist und ein Trennmittel umfaßt.

2. Trennmaterial gemäß Anspruch 1, wobei die genannte gemusterte Oberfläche aus einem von
a) einem helicoidalen Muster,
b) einem quadratisch eingeschnittenen Muster,
c) einem regelmäßigen reproduzierbaren Muster
besteht.

3. Trennmaterial gemäß Anspruch 1, wobei die Dichte der genannten gemusterten Oberfläche im Bereich von 1,97 bis 5,9 Linien pro mm (50 bis 150 Linien pro Zoll) liegt.

4. Trennmaterial gemäß Anspruch 3, wobei die Tiefe der Linien in einem Bereich von 12,7 bis 88,9 µm liegt.

5. Trennmaterial gemäß Anspruch 1, wobei die genannte erste Seite aus einer Polyolefinbeschichtung, die auf ein Papiersubstrat aufgetragen ist, gebildet wird, wobei die Polyolefinbeschichtung und das Papiersubstrat zwei der wenigstens drei Schichten bilden.

6. Trennmaterial gemäß Anspruch 5, wobei das genannte Papiersubstrat eine Dicke im Bereich von 25,4 µm (1 mil) bis 635 µm (25 mil) und ein Grundgewicht im Bereich von 20 g pro Quadratmeter bis 400 g pro Quadratmeter aufweist.

7. Trennmaterial gemäß Anspruch 5, wobei die genannte Polyolefinbeschichtung ausgewählt ist aus der Gruppe bestehend aus Polyethylen, Polypropylen, Polymethylpenten und Copolymeren, Terpolymeren und Mischungen davon.

8. Trennmaterial gemäß Anspruch 5, wobei die genannte Polyolefinbeschichtung ein Beschichtungsgewicht im Bereich von 3,5 g pro Quadratmeter bis 47 g pro Quadratmeter aufweist.

9. Trennmaterial gemäß Anspruch 8, wobei die genannte Polyolefinbeschichtung ein Beschichtungsgewicht im Bereich von 16 g pro Quadratmeter bis 28 g pro Quadratmeter aufweist.

10. Trennmaterial gemäß Anspruch 5, wobei die genannte Polyolefinbeschichtung eine Ra-Oberflächenabschlußbehandlung im Bereich von 3,8 µm (150 Mikrozoll) bis 10,2 µm (400 Mikrozoll) aufweist und eine Struktur mit einem Rz im Bereich von 22,9 µm (900 Mikrozoll) bis 50,8 µm (2.000 Mikrozoll) umfaßt.

11. Trennmaterial gemäß Anspruch 5, wobei die genannte Trennschicht als eine Beschichtung auf einer Oberfläche des genannten Substrats gegenüber der genannten Polyolefin-beschichteten Oberfläche ist.

12. Trennmaterial gemäß Anspruch 1, die aus vier Schichten gebildet wird, wobei eine erste Schicht eine Polyolefinbeschichtung mit einem darauf gebildeten sich wiederholenden, eingeschnittenen, geometrischen, symmetrischen Muster ist, eine zweite Schicht, die ein Papiersubstrat ist, eine dritte Schicht, die eine Polyolefinbeschichtung ist, und eine vierte Schicht, die die Trennschicht des Trennmaterials ist, wobei die erste und vierte Schicht die erste und zweite Seite des Trennmaterials darstellen.

13. Trennmaterial gemäß Anspruch 1, wobei das Trennmittel ausgewählt ist aus Fluorpolymer, Silicon und Chromkomplexen langkettiger Fettsäuren.

14. Kompositstruktur umfassend ein Substrat, eine Klebeschicht und ein Trennmaterial wie in Anspruch 1 beansprucht, wobei die Struktur unter Bildung einer Anordnung Trennmaterial/Klebeschicht/Substrat angeordnet ist, so daß die Klebeschicht sandwichartig zwischen dem Substrat und der glatten Trennschicht des Trennmaterials angeordnet ist.

15. Verfahren zur Herstellung einer eingeschnittenen, gemusterten Oberfläche auf einem Substrat umfassend die Schritte:
Aufbringen eines geschmolzenen Polyolefinextrudats auf eine Oberfläche eines Substrats, um ein Polyolefinbeschichtetes Substrat zu erzeugen; und
Führen des genannten Polyolefin-beschichteten Substrats durch den Walzenspalt sich gleichsinnig drehender Walzen, wobei eine der genannten Walzen eine zuvor eingeschnittene Oberfläche aufweist und eine Struktur mit einer mittleren Tiefe im Bereich von 12,7 µm (0,5 mil) bis 88,9 µm (3,5 mil) und einer Ra-Oberflächenabschlußbehandlung von 5,1 µm (200 Mikrozoll) bis 15,2 µm (600 Mikrozoll) aufweist, unter Bedingungen, die ausreichend sind, um einer Oberfläche der genannten Polyolefinbeschichtung eine Struktur mit einer mittleren Höhe, die der Tiefe der genannten Taschen entspricht, und einer Oberflächenabschlußbehandlung, die der Ra-Oberflächenabschlußbehandlung der genannten Walze entspricht, zu verleihen.

## Revendications

1. Pellicule séparable multicouche (20) pour utilisation avec un matériel facial adhésif, ladite pellicule séparable étant formée d'au moins trois couches et ayant un premier côté (14) et un second côté (26), le premier côté de ladite pellicule séparable étant doté d'un motif symétrique, géométrique, gravé, répétitif, et le second côté de ladite pellicule séparable constituant une couche séparable de la pellicule, le second côté étant lisse et incluant un agent de séparation.

2. Pellicule séparable selon la revendication 1, dans laquelle ladite surface mise en forme est l'une parmi :
a) un motif hélicoïdal,
b) un motif de quadragravure,
c) un motif reproductible régulier.

3. Pellicule séparable selon la revendication 1, dans laquelle la densité de ladite surface mise en forme est dans la plage de 1,97 à 5,9 lignes par mm (50 à 150 lignes par pouce).

4. Pellicule séparable selon la revendication 3, dans laquelle la profondeur des lignes est dans la plage de 12,7 µm à 88,9 µm.

5. Pellicule séparable selon la revendication 1, dans laquelle ledit premier côté est formé d'un revêtement de polyoléfine fourni sur un substrat de papier, le revêtement de polyoléfine et le substrat de papier formant deux des au moins trois couches.

6. Pellicule séparable selon la revendication 5, dans laquelle ledit substrat de papier a une épaisseur dans la plage de 25,4 µm (1 mil) à 635 µm (25 mils) et un poids de base dans la plage de 20 grammes par mètre carré à 400 grammes par mètre carré.

7. Pellicule séparable selon la revendication 5, dans laquelle ledit revêtement de polyoléfine est choisi parmi le groupe constitué de polyéthylène, polypropylène, polyméthylpentène, et des copolymères, terpolymères et mélanges de ceux-ci.

8. Pellicule séparable selon la revendication 5, dans laquelle ledit revêtement de polyoléfine a un poids de revêtement dans la plage de 3,5 grammes par mère carré à 47 grammes par mètre carré.

9. Pellicule séparable selon la revendication 8, dans laquelle ledit revêtement de polyoléfine a un poids de revêtement dans la plage de 16 grammes par mètre carré à 28 grammes par mètre carré.

10. Pellicule séparable selon la revendication 5, ledit revêtement de polyoléfine ayant une finition de surface Ra dans la plage de 3,8 µm (150 micro-pouces) à 10,2 µm (400 micro-pouces) et comportant une structure ayant une valeur Rz dans la plage de 22,9 µm (900 micro-pouces) à 50,8 µm (2000 micro-pouces).

11. Pellicule séparable selon la revendication 5, dans laquelle ladite couche de séparation est fournie en tant que revêtement sur une surface dudit substrat en vis-à-vis de ladite surface revêtue de polyoléfine.

12. Pellicule séparable selon la revendication 1, qui est formée de quatres couches, une première couche étant un revêtement de polyoléfine sur lequel est fourni le motif symétrique, géométrique, gravé, répétitif, une deuxième couche étant un substrat de papier, une troisième couche étant un revêtement de polyoléfine et une quatrième couche étant un revêtement de séparation de la pellicule, les première et quatrième couches constituant les premiers et second côtés de la pellicule.

13. Pellicule séparable selon la revendication 1, dans laquelle l'agent de séparation est choisi parmi des complexes de fluoropolymère, de silicone et de chrome d'acides gras à longue chaîne.

14. Structure composite incluant un substrat, une couche adhésive et une pellicule séparable selon la revendication 1, la structure étant conçue pour former un agencement de pellicule séparable/adhésif/substrat de sorte que la couche adhésive est enserrée entre le substrat et la couche séparable lisse de la pellicule séparable.

15. Procédé pour fabriquer une surface gravée, mise en forme, sur un substrat comprenant les étapes consistant à :
appliquer un extrudat de polyoléfine fondu sur une surface d'un substrat pour former un substrat revêtu de polyoléfine, et
diriger ledit substrat revêtu de polyoléfine à travers la ligne de contact de rouleaux coopérants, un desdits rouleaux ayant une surface préalablement gravée et comportant une structure ayant une profondeur moyenne dans la plage de 12,7 µm (0,5 mil) à 88,9 µm (200 micro-pouces) à 15,2 µm (600 micro-pouces), dans des conditions suffisantes pour conférer à une surface dudit revêtement de polyoléfine une structure ayant une hauteur moyenne correspondant à la profondeur desdites poches et une fi-nition de surface correspondant à la finition de surface Ra dudit rouleau.
